# EUROPÄISCHE PATENTSCHRIFT

(11) **EP 0 542 848 B1**
(45) Veröffentlichungstag und Bekanntmachung des Hinweises auf die Patenterteilung: **18.01.1995**
(21) Anmeldenummer: 91914579.7
(22) Anmeldetag: 08.08.1991
(51) Int. Cl.: A61C 11/00

(54) **KIEFER-ARTIKULATOR**
DENTAL ARTICULATOR
ARTICULATEUR DE MACHOIRES

(30) Priorität: 08.08.1990 DE 4025121
(43) Veröffentlichungstag der Anmeldung: 26.05.1993
(60) Teilanmeldung: 94106362.0
(73) Patentinhaber: POLZ, Michael Heinz, 8650 Kindberg (AT)
(72) Erfinder: POLZ, Michael Heinz, 8650 Kindberg (AT)
(74) Vertreter: Matschkur, Götz, Lindner Patent- und Rechtsanwälte
(86) Internationale Anmeldenummer: EP9101498
(87) Internationale Veröffentlichungsnummer: WO9202192

(56) Entgegenhaltungen:
- DE-A- 2 443 835
- DE-A- 2 833 835
- FR-A- 2 430 761
- FR-A- 2 498 924
- FR-A- 2 527 071
- US-A- 3 406 451
- US-A- 3 590 487
- US-A- 3 866 323
- US-A- 4 024 640
- US-A- 4 639 220
- US,A, 3866323 (GRANGER) 18. Februar 1975, siehe Spalte 2, Zeile 63-Spalte 3, Zeile 10; Abbildungen 1,2

## Beschreibung

Die Erfindung betrifft einen Artikulator zur Simulation von Kieferbewegungen, gemäß Oberbegriff bzw. ersten Teil des Anspruchs 1. Ein Artikulator, welcher die Merkmale des Oberbegriffs von Anspruch 1 aufweist, ist aus der US-A-3 590 487 bekannt.

Weitere Geräte sind auf dem Gebiet der Zahnmedizintechnik bekannt (vgl. W. Hoffmann-Axthelm "Lexikon der Zahnmedizin" Quintessenz-Verlags GmbH Berlin, 1983; "Einführung in die Zahnersatzkunde" Verlag Urban und Schwarzenberg, 1975; DE-A-2 833 835).

Der Kiefer-Artikulator dient zur Simulation von Kiefergelenkbewegungen mit eingesetzten Zahn- und Kiefermodellen, wobei er die Bewegung der Kiefer zueinander in mehr oder weniger großer Vollkommenheit außerhalb des Mundes nachzuahmen gestattet Das Hauptproblem bei der Kiefer-Artikulation besteht darin, möglichst alle Bewegungen des menschlichen Unterkiefers relativ zum Oberkiefer mittelwertig zu simulieren. Hierzu sind Artikulatoren bekannt, die sehr viele Einstellmöglichkeiten aufweisen (US-A-3 590 487). Die Einstellung erfolgt nach einer vom Zahnarzt vorgenommenen Pantografie (dreidimensionale Aufzeichnung der individuellen Unterkiefer-Bewegungen des jeweiligen Patienten). Dies ist mit einem kostspieligen Zeitaufwand von etwa zwei bis drei Stunden für die Informationsaufnahme am Patienten ver bunden. Das nachfolgende Programmieren des Artikulators nach dieser Pantografie erfordert etwa drei bis fünf Stunden.

Ferner sind Artikulatoren bekannt, bei denen die Neigung der Gelenkbahn in sagittaler Richtung verstellbar ist. Begrenzbar, das heißt einstellbar ist ebenfalls die Bewegung des Kondylus in transversaler Richtung (Bennet-Winkel). Die Gelenkteile dieser als Arcon-Artikulatoren bekannten Simulationsgeräte sind entsprechend anatomischen Verhältnissen gestaltet, das heißt, die Kondylen sind am Artikulator-Unterteil, und das Kondylargehäuse bzw. die Gelenkbox mit der Einstelleinrichtung für den Bennet-Winkel am Oberteil des Artikulators angebracht. Allerdings ermöglichen diese bekannten Artikulatoren für den jeweiligen Gelenkkopf bzw. die Kondyle nur eine reine Lateralbewegung; das Lineal der zweiten Gelenkbox bzw. die Kondyle darin bewegt sich dann median. Im übrigen sind die Gelenkköpfe in ihren Boxen eng gekapselt aufgenommen, sodaß Freiheitsgrade für Bewegungskomponenten in weiteren Richtungen nicht zur Verfügung stehen.

Hieraus ergibt sich das der Erfindung zugrundeliegende Problem, einen Artikulator mit ausreichender Bewegungsreserve für Kieferbewegungen zu schaffen, um die Modellierung eines für den Patienten angenehm zu tragenden und physiologisch schonenden Zahnersatzes zu ermöglichen. Zur Lösung wird ein Artikulator der eingangs genannten Art vorgeschlagen, der erfindungsgemäß durch die im Anspruch 1 genannten Merkmale gekennzeichnet ist.

Diese Führung des Artikulator-Unterteils im Gelenk gegenüber dem Oberteil ermöglicht bei der Zahnersatz-Modellierung Bennetsche Bewegungen mittelwertig nach rückwärts bzw. retrusiv (retral) und/oder nach oben bzw. surtrusiv. Hierdurch lassen sich Fehler bei der Nachbildung der Oberkiefer/Unterkieferokklusion ausmerzen, die andernfalls ein mühsames Nachschleifen durch den Zahnarzt erforderlich machen und möglicherweise das gesamte Kausystem stören oder gar zerstören würden.

Nach dem Erfindungsgedanken sind im Gelenk eine oder mehrere erste Linearführungen ausgebildet, die parallel zur Richtung einer gedachten Scharnierachse verläuft bzw. verlaufen. Ferner weist die jeweilige Führung einen zweiten Führungsflächen - oder - bahnenabschnitt auf, der von der Richtung der gemeinsamen scharnierartigen Verbindungsachse der Gelenke nach surtrvsiv und/oder retrusiv abweicht. Als Abweichungswinkel solcher Surtrusions- und/oder Retrusions-Bewegungskomponenten gegenüber der Scharnierachse haben sich Winkel von etwa 13° - 17°, insbesondere 15°, in der Praxis bewährt. Dies wird zweckmäßig dadurch realisiert, daß der Winkel, den die Linearführung zur Realisierung der genannten Retrusion und/oder Surtrusion mit der Scharnierachse einschließt, spitz ist und vorzugsweise etwa 30° beträgt.

Mit der erfindungsgemäßen Führung der Bennet-Bewegungen (Laterotrusion) auch nach kranial (Surtrosion) - insbesondere in einem Winkel von 15°gegenüber der Scharnierachse - wird der Vorteil erzielt, daß die Okklusion im Seitenzahnbereich so gestaltet werden kann, daß die Bewegungsfreiheit des Unterkiefers in diese Richtung zusätzlich gesichert ist. Wird die Bennet-Bewegung nicht nur nach lateral oder kranial, sondern auch insbesondere 15° nach retral (Retrusion) geführt, wird der Vorteil erzielt, daß die Unterkieferbewegung nicht nur nach lateral und kranial, sondern auch nach lateral, kranial und retral verläuft. Durch diese Möglichkeit des Bewegungsablaufes ist der retrale Freiraum in der Okklusion gegeben.

Grundsätzlich können die zweiten Gleitflächen oder -bahnen gekrümmt bzw. gebogen verlaufen. Mit besonderem Vorteil jedoch weisen sie wenigstens lineare bzw. geradlinige Teilabschnitte auf.

Forschungsergebnissen wird nach einer weiteren Ausbildung der Erfindung Rechnung getragen, nach der die Gelenkbox innen bzw. konkav gewölbt ist, wobei die Wölbung im Mittel einen Radius von etwa dreiviertel Zoll aufweist. Der Bewegungsablauf des Unterkiefers unterscheidet sich also zu den herkömmlichen Mittelwert-Artikulatoren dadurch, daß die sagittale Kondylenbahn einen dreiviertel Zoll Radius aufweist.

Um die Kiefergelenkartikulation noch besser an spezifische Besonderheiten individueller Gebisse der Patienten anpassen zu können, ist nach einer weiteren Ausbildung der Erfindung ein die Gelenkbox durchsetzender und in deren Inneres mündender Richt-Kanal vorgesehen, in dem ein Stellorgan hin- und herbewegbar geführt ist, und zwar dergestalt, daß er an dem Gelenkkopf zu dessen Verstellung angreifen kann. So können die Gelenkköpfe bzw. Kondylen gezielt in eine latero-protrusive oder protrusive Stellung gebracht werden, wodurch eine Äquilibrierung einer vorhandenen Okklusion selektiv sowie der Neuaufbau einer solchen bewerkstelligt werden kann.

Nach einer anderen Ausbildung der Erfindung, die von Artikulatoren mit Bennet-Winkellinealen am Gelenk zur Verschiebung des Gelenkkopfs ausgeht, ist vorgesehen, daß das Bennet-Winkellineal in einem feststehenden Winkel von 10° zur Scharnierachse der Gelenke bzw. zur Medianebene angeordnet ist. Damit wird eine Anpassung an den (an sich bekannten) Bennet-Winkel von 6 - 7,5° erreicht. Im Zusammenhang mit Bennnet-Winkellinealen ist es vorteilhaft, diese verstellbar zur Medianebene von 0 bis 3 Millimeter nach vorhandener Skala in 0,5 Millimeter-Teilung auszuführen. Dadurch ist eine individuelle Einstellmöglichkeit der unmittelbaren Medianverschiebung des Kondylus (immediate side - shift) gewährleistet.

Nach einer weiteren Erfindungsausbildung ist vorgesehen, daß das Ober- und/oder Unterteil jeweils mit einer Neigung von 10° gegenüber der Horizontalebene verläuft. Mit Vorteil ist diese Neigung nach dorsal gesehen schräg nach oben gerichtet. Mit anderen Worten, die beiden Artikulatorteile für Ober- und Unterkiefer stehen nicht parallel zur Horizontalebene, sondern sind - gemessen zur Okklusionsebene - um 10° nach oben geneigt. Das bringt wesentliche Vorteile mit sich: Die räumliche Einorientierung des Oberkiefers nach kranial ist aufgrund der Erhöhung des Rahmens im posterioren Bereich erleichtert. Die Artikulator-Rahmenteile sind mithin an die Okklusionsebene angenähert. Die Expansionskompensation des Montagegipses für den Zahnersatz wird ausgeglichener. Durch die genannte 10°-Neigung des Artikulatorrahmens ist die Montageplatte des Artikulators zum Modellsockel nahezu parallel, sodaß Ungenauigkeiten durch das Montagematerial (Gipsexpansion) beherrschbarer sind. Ein fertigungstechnischer Vorteil beim Dublieren ist darin zu sehen, daß bei der Demontage der Modelle die Okklusionsebenen parallel zur Horizantalebene liegen. Ein herausgenommmenes Modell, das auf einem Tisch horizontal steht, kann mittels einer Küvette dubliert werden, wenn darin die Dubliermasse eingefüllt wird. Ohne die erfindungsgemäße 10°-Neigung würde die Okklusionsebene schief nachgebildet werden. Schließlich läßt sich durch die winkelmäßige Anpassung des unteren und oberen Artikulatorrahmens (Unter- und Oberteil) auch die Krafteinleitung auf die Okklusionsebene konzentrieren: durch die Anpassung mittels der genannten 10°-Neigung an die Okklusionsebene wird das für die Kiefer-Schließbewegung aufgebrachte Drehmoment ausschließlich in eine Kraftkomponente umgesetzt, die senkrecht zur Okklusionsebene gerichtet ist; eine Aufsplitterung in weitere wirkungslose Kraftkomponenten parallel zur Okklusionsebene wird vermieden. Durch diese Art der Krafteinleitung wird ein sicherer Okklusionsbefund und ein Okklusionsgleichgewicht gewährleistet.

Bei der Handhabung von Artikulatoren ist es wünschenswert, Ober- und Unterteil im Nullpunkt der Okklusion verriegeln zu können. Zur Lösung wird nach einer weiteren Ausbildung des erfindungsgemäßen Artikulators, dessen Gelenkteile auch transversale bzw. laterale Bewegungskomponenten des Unterteils quer zur Median- bzw. Sagittalebene und/oder in Richtung der Scharnierachse der Gelenke erlauben, ein erstes und zweites Sperrelement vorgeschlagen, die am Ober- und Unterteil angeordnet und miteinander lösbar in Eingriff bringbar sind derart, daß laterale Bewegungskomponenten von Ober- und Unterteil gegeneinander ausgeschlossen sind. Die zentrische statische Position der Okklusion (Nullpunkt der Okklusion) ist so arretiert. Wenn die Bennetschen Bewegungen gemäß erstgenannter Erfindungsalternative simuliert werden sollen, muß die Zentrik-Verriegelung natürlich gelöst werden indem, das erste und zweite Sperrelement voneinander außer Eingriff gebracht werden.

Ein Konstruktionskonzept für diesen Erfindungsgedanken besteht darin, daß das eine Sperrelement als an Ober- und/oder Unterteil unbeweglich angebrachte Raste oder Spalt, und das andere Sperrelement als darin einschwenkbares und quer oder schräg zur Lateralrichtung fixier- und handhabbares Einrast- oder Einrückorgan ausgebildet sind; das letztgenannte Organ ist dabei am Unter- bzw. Oberteil anscharniert. In weiterer konstruktiver Ausgestaltung ist der Spalt rückseitig am Unterteil durch zwei nebeneinander vorspringende und nach oben offene Haken gebildet, und das Einrastorgan rückseitig am Oberteil anscharniert; es weist beidseits laterale Vorsprünge auf, sodaß es in die genannten offenen Haken fallen kann. Der Vorteil besteht darin, daß der Artikulator sowohl in geöffntetem als auch in geschlossenem und zentrisch arretierten Zustand zusammenhängend oder geteilt zu verwenden ist.

Um individuelle Patientenwerte (zum Beispiel Bennet-Winkel, Intercondylarabstand usw.) am Artikulator einstellen zu können, müssen sie als individuelles Registrat am Patienten gemessen werden. Dies kann für die sagittale Kondylenneigung und den Bennet-Winkel zum Beispiel mit Gesichtsbögen geschehen (extraorale Registrierung). Zur intraoralen Bestimmung der sagittalen Kondylenbahnneigung läßt man den Patienten in protrudierter (nach vorne bewegter) Stellung in ein Wachsregistrat auf einer Bißgabel einbeißen. In dieser Stellung befinden sich die Kondylen in einer Position, welche typisch ist für die jeweilige individuelle Gelenkbahnneigung. Bringt man nun dieses Wachsregitrat zwischen die Zahnreihen von Zahnersatz-Kiefermodellen, welche in einem Artikulator mit verstellbarer Kondylenbahnneigung fixiert sind, und setzt man die Kiefermodelle exakt in das Wachsregistrat ein, so führen die Gelenke des Artikulators Bewegungen aus, die den individuellen Kiefergelenkbewegungen des jeweiligen Patienten im wesentlichen entsprechen. Mithin kann das Gelenk des Artikulators so nach der individuellen Gelenkbahnneigung des Patienten justiert werden.

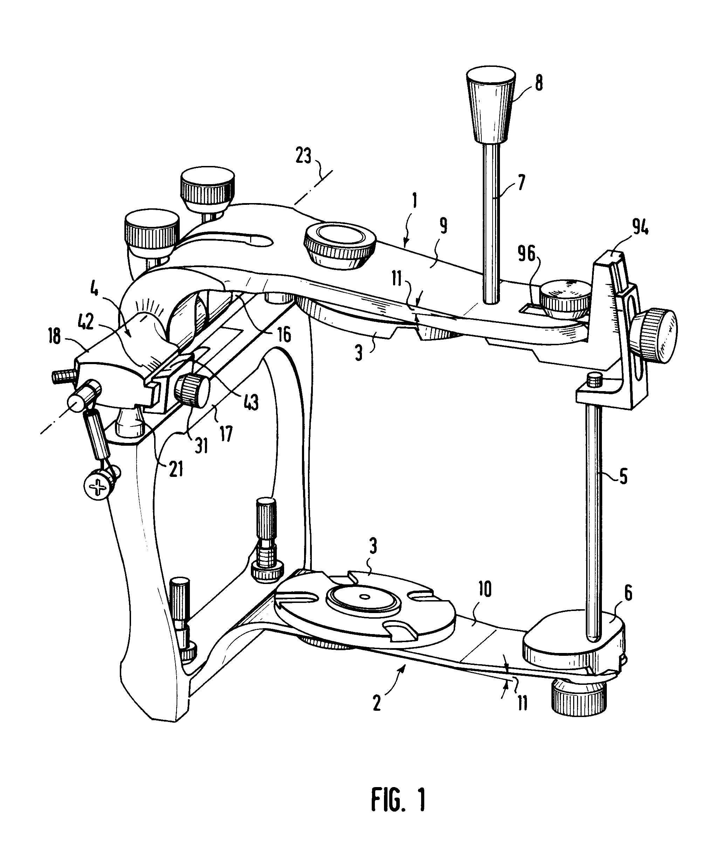

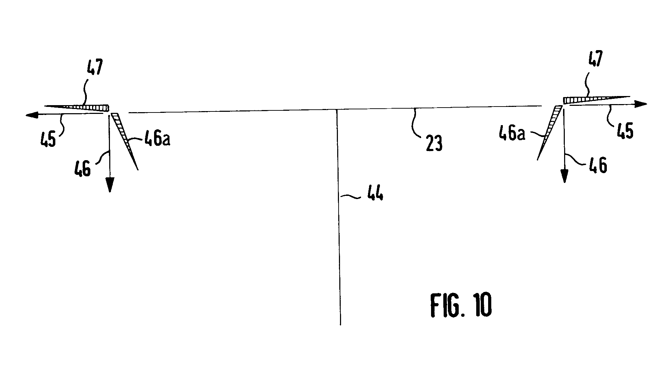

Weitere Einzelheiten, Merkmale und Vorteile auf der Basis der Erfindung ergeben sich aus der nachfolgenden Beschreibung eines bevorzugten Ausführungsbeispiels der Erfindung sowie anhand der Zeichnungen. Diese zeigen in
- Fig. 1: eine perspektivische Darstellung des Artikulators;
- Fig. 2: eine Seitenansicht des Artikulators;
- Fig. 3: eine Rückansicht des Artikulators;
- Fig. 4: eine horizontale Draufsicht auf die Unterseite der Artikulator-Gelenkbox ohne Bennett-Winkellineal;
- Fig. 5: eine entsprechende Draufsicht mit in die Gelenkbox einwirkendem Bennett-Winkellineal;
- Fig. 6: eine Frontalansicht gemäß der Richtung VI in Fig. 4;
- Fig. 7: eine Seitenansicht auf den Gelenkkopf zur Aufnahme in der Gelenkbox nach Fig. 4 - 6;
- Fig. 8: eine Ansicht nach lateral gemäß der Richtung VIII in Fig. 4;
- Fig. 9: eine Ansicht nach Median gemäß der Richtung IX in Fig. 4;
- Fig. 10: einen schematischen Horizontal-Plan für mit dem Artikulator simulierte Unterkieferbewegungen;
- Fig. 11: in vergrößertem Ausschnitt eine Seitenansicht auf die Zentrikverriegelung in geöffneter Stellung;
- Fig. 12: eine entsprechende Ansicht auf die Zentrikverriegelung in geschlossener Stellung;
Zur Ausführung der Erfindung dient gemäß Fig. 1 - 3 ein Artikulator mit einem Oberteil 1 und einem daran angelenkten Unterteil 2, die jeweils zum Tragen eines Oberkiefer- bzw. Unterkiefer-Modells mittels unterseitig angeordneten Tragtellern 3 ausgebildet sind. Ober- und Unterteil 1, 2 sind über Gelenke 4 gegeneinander verschwenkbar und linear bewegbar (vgl. Fig. 10) verbunden. Ein am Oberteil 1 montierter Stützstift 5 erstreckt sich nach unten zu einem am Unterteil 2 montierten Stützstift-Führungsteller 6 und steht dort mit seinem Ende auf, um die Bißhöhe zu fixieren. Eine am Oberteil 1 nach oben ragende Handhabe 7 mit Handgriff 8 ermöglicht es, zur Nachahmung von Bewegungen des Kiefergelenkes dem Oberteil 1 relativ zum Unterteil 2 Schwenk- und Linearbewegungen 22,45,46,47 zu erteilen, die durch die Gelenke 4 vermittelt werden. Derartige Artikulatoren sind an sich bekannt, und wegen weiterer Einzelheiten wird auf die Fachliteratur verwiesen.

Im Sinne der Erfindung verlaufen Oberteil- bzw. Unterteil-Mittelabschnitte 9, 10, an denen die Tragteller 3 angeschraubt sind, mit ihren jeweiligen Ober- und Unterseiten in einem Neigungswinkel 11 von 10°. Hierdurch wird in dorsaler Richtung 12 zu den Gelenken 4 gesehen ein Ansteigen der Oberteil- bzw. Unterteil-Mittelabschnitte 9, 10 nach oben bewirkt.

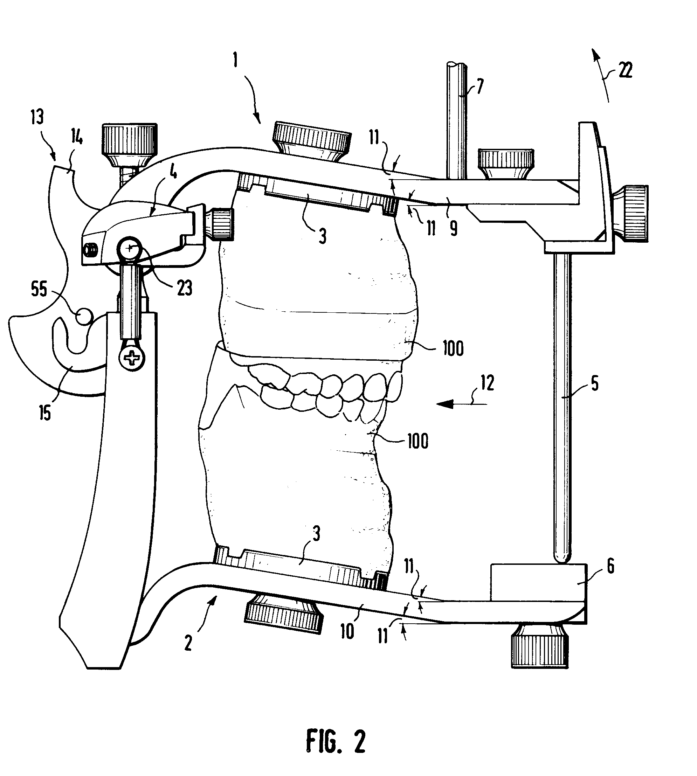

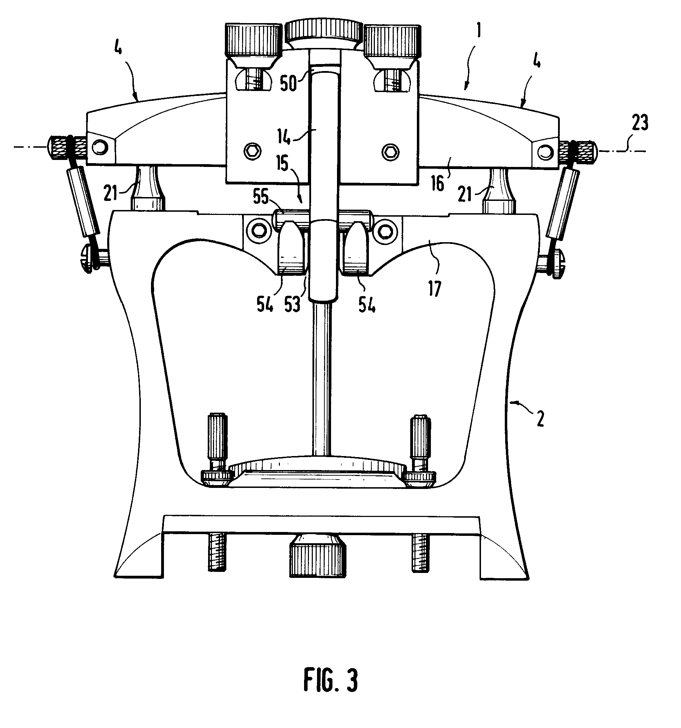

Wie insbesondere aus Fig. 2 und 3 ersichtlich, ist der Artikulator erfindungsgemäß mit einer Zentrikverriegelung 13 ersehen, die an der Artikulator-Rückseite zwischen den Gelenken 4 angeordnet ist und aus zwei am Ober- und Unterteil 1, 2 angebrachten Sperrelementen 14, 15 besteht. Diese sind etwa in der Mitte der rückseitigen Querstege 16 bzw. 17 von Ober- und Unterteil 1, 2 angeordnet.

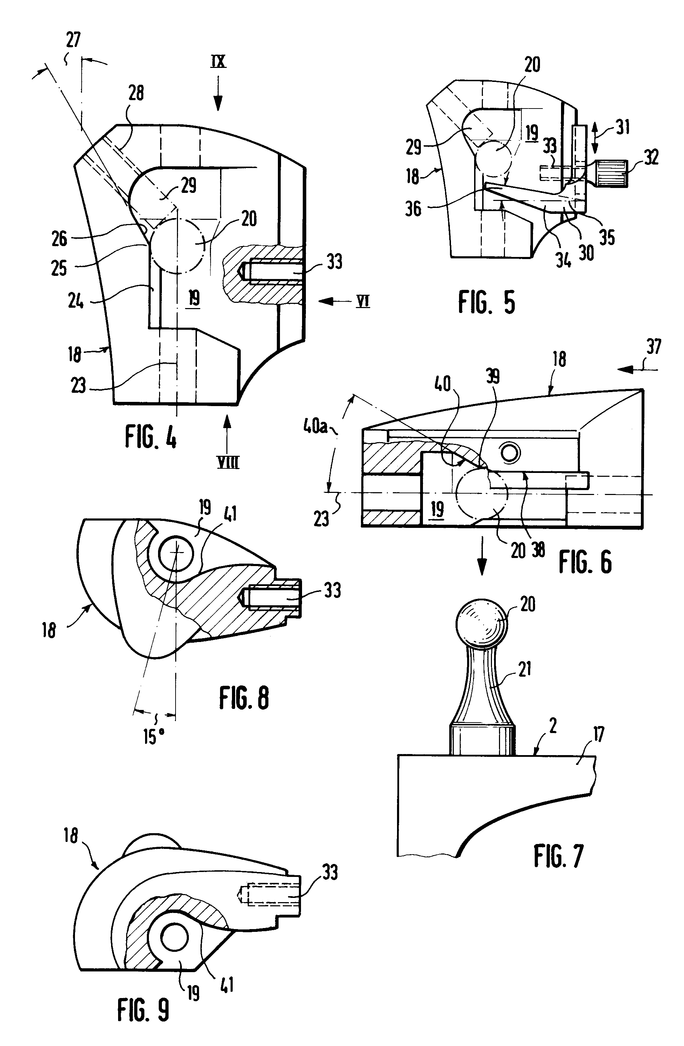

Nachfolgend wird anhand der Fig. 4 - 9 Aufbau und Funktionsweise des Artikulator-Gelenkteiles 4 verdeutlicht:
Es besteht im wesentlichen aus einer Gelenkbox 18, an deren in Fig. 4 sichtbaren Unterseite ein Aufnahme-Hohlraum 19 ausgebildet ist, und einem darin aufgenommenen Kugelgelenkkopf 20. Die Gelenkbox 18 bildet das jeweilige Ende des Quersteges 16 des Oberteils 1, und der Kugelgelenkkopf 20 sitzt auf der Spitze eines Stieles 21, der am Unterteil 2 im oberseitigen, lateralen Endbereich des Quersteges 17 fixiert ist. Der Kugelgelenkkopf 20 kann an der den Hohlraum 19 begrenzenden Wandung, die konkav mit der Basis eines Radius von 3/4 Zoll gewölbt ist, abrollen. So können dem Oberteil 1 Schwenkbewegungen 22 gegenüber dem Unterteil 2 erteilt werden, die im wesentlichen um eine (gedachte) Scharnierachse 23 durch die jeweiligen Zentren der Kugelköpfe 20 der beiden Gelenke 4 erfolgen und der Simulation von Unterkiefer-Bewegungen gegenüber dem Oberkiefer dienen. In Fig. 2 verläuft die Scharnierachse 23 senkrecht und in Fig. 1, 3 und 4 in der Zeichenebene.

Gemäß Fig. 4 liegt der Kugelgelenkkopf 20 nach dorsal an einer Führungsfläche 24 an, die für den Kugelgelenkkopf 20 eine weitgehend lineare Leitbahn zum Gleiten bildet. Diese Führungs- fläche bzw. Gleitbahn 24 verläuft von medial nach lateral gesehen - zunächst in einem zur Scharnierachse 23 parallelen Abschnitt und geht dann über eine konvexe Ecke 25 über in einen Schrägabschnitt 26, der von der Richtung der Scharnierachse 23 mit einem Winkel 27 von etwa 30° nach retral/dorsal bzw. retrusiv abweicht. Mithin bildet der Schrägabschnitt 26 eine Führungsfläche bzw. Gleitbahn zur Simulation einer Retrusion des Unterkiefers gegenüber dem Oberkiefer. Der Winkel 27 von 30° führt dabei zu einer dynamischen Abweich-Bewegung des Kugelgelenkkopfs 20 gegenüber der Scharnierachse 23 von etwa 15°.

Ferner ist eine in den Hohlraum 19 der Gelenkbox 18 mündende Durchgangsbohrung 28 mit Innengewinde vorgesehen, in der eine Protrusionsschraube 29 durch Verdrehung linear hin und her bewegbar ist. Die Innengewinde-Durchgangsbohrung 28 ist derart ausgerichtet, daß die darin kämmende Protrusionsschraube 29 auf den Kugelgelenkkopf 20 etwa im vom Schrägabschnitt 26 begrenzten Bereich angreift und für diesen eine Retrusion verhindert bzw. eine Protrusion hervorruft.

Gemäß Fig. 5 ragt in den Hohlraum 19 der Gelenkbox 18 ein Bennett-Winkellineal 30 hinein, das in Lateral-/Medial-Richtung 31 hin und her bewegbar gelagert und mittels einer Rändelschraube 32 in einer Innengewinde-Sacklochbohrung 33 feststellbar ist. Der auf den Kugelgelenkkopf 20 zu dessen Versetzung im Sinne einer Bennett-Bewegung einwirkende Teil des Bennett-Winkellineals ist sein in den Hohlraum 19 der Gelenkbox 18 einragender Schenkel 34. Dessen dem Kugelgelenkkopf 20 zugewandte Seite bildet für diesen eine Gleitbahn und schließt mit einer Geraden 35, die parallel zur Kiefer-Medianebene 44 bzw. senkrecht zur Scharnierachse 23 verläuft, einen Winkel von etwa 10° ein.

Gemäß Fig. 6 liegt der Kugelgelenkkopf 20 auch nach kranial an der den Hohlraum 19 der Gelenkbox 18 begrenzenden Wandung an. In der Ansicht nach Fig. 6 teilt sich diese Wandung - analog zu Fig. 4 - in lateraler Richtung 37 gesehen - zu- nächst in eine erste Führungsfläche 38 parallel zur Scharnierachse 23 und - von einer konvexen Ecke 39 abge- grenzt - einen nachfolgenden Schrägabschnitt 40 auf, der mit der Scharnierachse 23 nach kranial/oben abweichend einen Winkel 40a von etwa 30° einschließt. Dadurch wird für den Kugelgelenkkopf 20 zusätzlich oder alternativ zur 15°-Retrusion gemäß Fig. 4 eine Bewegungsreserve im Sinne einer Surtrusion von 15° gegenüber der Scharnierachse geschaffen. Soll die Bewegungsreserve sowohl die 15°-Retrusion (Fig. 4) als auch die 15°-Surtrusion (Fig. 6) umfassen, lassen sich die konvexen Ecken 25 (Fig. 4) und 39 (Fig. 6) als Punkte einer Scheitellinie 41 auffassen, die in Fig. 8 und 9 gezeichnet ist und die Lateralführung von der Surtrusions- und Retrusions-Führung des Kugelgelenkkopfes 20 abgrenzt.

Zum erläuterten Bennett-Winkellineal 30 bleibt noch nachzutragen, daß die Außenseite der Gelenkbox 18 gemäß Fig. 1 als Informationsträger ausgebildet ist, nämlich eine 3 mm lange Einstellskala 42 aufweist. Mit dieser wirkt eine Justiermarke 43 in Form eines geraden Striches auf den zweiten, von der Rändelschraube 32 durchsetzten Schenkel des Bennett-Winkellineals zusammen.

Der Horizontal-Plan gemäß Fig. 10 dient zur weiteren Verdeutlichung der Wirkungsweise der Retrusions- und Surtrusions-Führung des Kugelgelenkkopfes 20 am Artikulator-Unterkieferteil 2: Die horizontale Linie entspricht der Scharnierachse 23, während die vertikale Linie 44 eine Draufsicht auf die Kiefer-Medianebene wiedergibt. Bei herkömmlichen Artikulatoren können sich die Kugelgelenkköpfe 20 jedenfalls lateral, also im Sinne einer Laterotrusion 45, bewegen. Zum besseren Verständnis ist noch zusätzlich der sogenannte "Immediate Side Shift" 46a mit schraffiertem Dreieck angedeutet, der sich in den von der Scharnierachse 23 und der Medianebene 44 begrenzten Bereich erstreckt. Die Protrusion parallel zur medialen Ebene 44 ist mit Bezugsziffer 46 markiert. Der Schrägabschnitt 26 gemäß Fig. 4 ermöglicht die Retrusion 47 für den Kugelgelenkkopf 20, die mittels des entsprechend bezifferten, schraffierten Dreiecks veranschaulicht ist, das sich außerhalb des von der Scharnierachslinie 23 und der Medianlinine 44 begrenzten Bereichs erstreckt. Das Schema gemäß Fig. 10 läßt sich auch als Frontal-Plan deuten, wobei die letztgenannten, schraffierten Dreiecke 47 dann die Surtrusion darstellen, die durch den Schrägabschnitt 40 gemäß Fig. 6 als Gleit-Führungsbahn für das Kugelkopfgelenk 20 herbeigeführt werden.

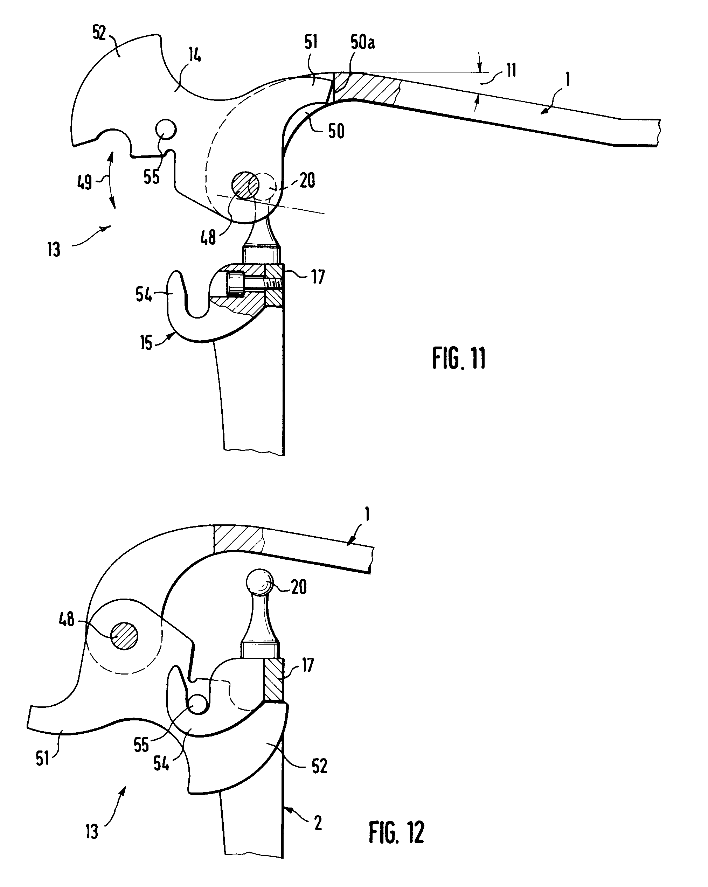

Anhand der Fig. 3, 11 und 12 wird die Zentrikverriegelung 13 näher erläutert: Deren erstes Sperrelement 14 ist über eine Gelenkstelle 48 mit dem Artikulator-Oberteil 1 verbunden. Es ist als schmales Einrückorgan ausgebildet, dem aufgrund seiner flächenhaften Erstreckung leicht manuell eine Schwenkbewegung 49 entweder zum zweiten Sperrelement 15 oder in einen Anschlagsspalt 50 erteilt werden kann, der im Quersteg des Artikulator-Oberteils 1 rückseitig und mittig ausgebildet ist. In Fig. 11 ist das erste Sperrelement bzw. Einrückorgan 14 mit seiner Anschlagnase 51 am Ende 52 des Anschlagspalts 50 angestoßen. In dieser Stellung gemäß Fig. 11 sind laterale Relativbewegungen von Kugelgelenkkopf 20 und Gelenkbox 18 möglich. Sollen diese verhindert werden, d.h. Ober- und Unterteil 1, 2 gegeneinander zentrisch verriegelt werden, wird dem Einrückorgan eine nach unten gerichtete Schwenkbewegung 49 erteilt, so daß es in die aus Fig. 3 ersichtliche Stellung gelangt. Dabei ist der Handhabungsansatz 52 des Einrückorgans 14 in einen Sperrspalt 53 gerückt, der von zwei nach oben offenen Auffanghaken 54 begrenzt ist. Diese bilden zusammen das zweite Sperrelement 15 bzw. dessen Sperrspalt 53 und legen den Handhabungsansatz 52 bzw. das obere Sperrelement 14 zusammen mit dem Oberteil 1 fest. Dieses ist beidseitig mit zwei lateral verlaufenden Einhäng-Vorsprüngen 55 versehen, die in der zentrisch ver- riegelten Stellung gemäß Fig. 3 an der Querstrebe 17 des Unterteils 2 anliegen, aber (noch nicht) in der von den beiden beabstandeten Auffanghaken 54 gebildeten Auffang- gabel vollständig eingerückt bzw. aufgenommen sind. Dies ist erst dann möglich, wenn der Kugelgelenkkopf 20 außer Eingriff mit der Gelenkbox 18 gebracht ist und gemäß Fig. 12 freiliegt. Dann ist das Artikulator-Oberteil 1 samt Gelenk 48 gegenüber der Querstrebe 17 des Artikulator-Unterteils 2 nach hinten (dorsal) und nach unten (kaudal) derart versetzt, daß die Einhängvorsprünge 55 in den beiden Auffanghaken 54 bzw. der davon gebildeten Auffanggabel auf- liegen. Dann kann das Oberteil 1 um das Gelenk 48 um ca. 180° herumgeschwenkt werden, so daß die Handhabe 7 über ihren beispielswiese gummiartigen Handgriffsteil 8 auf einer Tischplatte oder dergleichen aufliegt. Diese (nicht gezeichnete) Stellung eignet sich, Ober-/Unterkiefer-Modelle 100 an die Tragteller 3 (vgl. Fig.2) anzubringen bzw. abzunehmen.

## Patentansprüche

1. Artikulator zur Simulation von Kieferbewegungen, mit als Träger eines Oberkiefer- und/oder Unterkiefermodells dienendem Ober- und Unterteil (1,2), die miteinander gelenkig verbunden sind, wobei das Gelenk (4) eine mit Ober- oder Unterteil (1,2) verbundene Gelenkbox (18) und einen darin beweglich aufgenommenen sowie mit Unter- beziehungsweise Oberteil (1,2) verbundenen Gelenkkopf (20) aufweist, wobei in der Gelenkbox (18) eine oder mehrere Führungen zur Erzeugung von Bewegungskomponenten (47) des Gelenkkopfs (20) für eine Surtrusion und/oder Retrusion vorgesehen sind, dadurch gekennzeichnet, daß die jeweilige Führung einen ersten Führungsflächen- oder -bahnabschnitt (24;38), der parallel zur Richtung einer gedachten Scharnierachse (23) verläuft, und nachfolgend einen zweiten Führungsflächen- oder -bahnabschnitt (26,40) aufweist, der zur Richtung der Scharnierachse (23) derart schräg verläuft, daß surtrusive und/oder retrusive Bewegungskomponenten (47) des Gelenkkopfs (20) erzeugt werden.

2. Artikulator nach Anspruch 1, dadurch gekennzeichnet, daß der oder die zweiten Führungsflächen- oder -bahnenabschnitte (26,40) mit der Scharnierachse (23) einen solchen spitzen Winkel (27,40) einschließen, daß die Unterteil-Bewegungsrichtung von der Scharnierachse (23) nach surtrusiv und/oder retrusiv mit einem Winkel von etwa 13° - 17°, insbesondere 15°, abweicht.

3. Artikulator nach Anspruch 2, dadurch gekennzeichnet, daß der spitze Winkel etwa 30° beträgt.

4. Artikulator nach Anspruch 1, 2 oder 3, dadurch gekennzeichnet, daß die zweiten Führungsflächen oder -bahnen (26,40) zumindest teilweise linear verlaufen.

5. Artikulator nach Anspruch 1, 2, 3 oder 4, gekennzeichnet durch eine innen beziehungsweise konkav - vorzugsweise mit einem Radius von etwa dreiviertel Zoll - gewölbte (19) Gelenkbox (18).

6. Artikulator nach einem der vorangehenden Ansprüche, gekennzeichnet durch einen in das Innere (19) der Gelenkbox (18) mündenden Richt-Kanal (28), in dem ein Stellorgan (29) beweglich geführt ist, um am Gelenkkopf (20) zu dessen Verstellung anzugreifen.

7. Artikulator nach Anspruch 6, dadurch gekennzeichnet, daß der Kanal (28) derart ausgerichtet ist, daß das Stellorgan (29) auf den Gelenkkopf zur Herbeiführung einer Protrusion und/oder Latero-Protrusion (45,46) einwirkt.

8. Artikulator nach Anspruch 6 oder 7, dadurch gekennzeichnet, daß der Kanal (28) als Durchgangsbohrung mit Innengewinde, und das Stellorgan (29) als damit kämmende Schraube ausgeführt ist.

9. Artikulator nach einem der vorangehenden Ansprüche, bei dem ein Bennett-Winkellineal (30) am Gelenk (4) zur Versetzung und/oder Begrenzung der Bewegungsbahn des Gelenkkopfs (20) angeordnet ist, dadurch gekennzeichnet, daß das Bennett-Winkellineal (30) in einem feststehenden Winkel (36) von 10° zur Gelenk-Scharnierachse (23) und/oder Kiefer-Medianebene (44) angeordnet ist.

10. Artikulator nach einem der vorangehenden Ansprüche, bei dem ein Bennett-Winkellineal (30) am Gelenk (4) zur Versetzung und/oder Begrenzung der Bewegungsbahn des Gelenkkopfs (20) angeordnet ist, dadurch gekennzeichnet, daß das Bennett-Winkellineal (30) eine drei Millimeter lange Einstell-Skala (42) mit einer Unterteilung in halbe Millimeter aufweist.

11. Artikulator zur Simulation von Kieferbewegungen, mit als Träger eines Oberkiefer- und/oder Unterkiefer- modells dienendem Ober- und Unterteil (1,2), verbunden mittels einem oder mehreren Gelenken (4), die auch transversale beziehungsweise laterale Bewegungs-komponenten (45) des Unterteils (2) quer zur Median- beziehungsweise Sagittalebene (44) und/oder in Richtung der Scharnierachse (23) der Gelenke (4) erlauben, nach einem der vorangehenden Ansprüche, gekennzeichnet durch ein erstes und zweites Sperrelement (14,15), die am Ober- und Unterteil (1,2) angeordnet und miteinander lösbar in Eingriff bringbar sind zum Ausschluß lateraler Bewegungskomponenten (45) von Ober- und Unterteil (1,2) gegeneinander.

12. Artikulator nach Anspruch 11, dadurch gekennzeichnet, daß das eine Sperrelement (15) als an Ober- oder Unterteil (1,2) unbeweglich angebrachte Raste oder Spalt (53), und das andere Sperrelement (14) als darin einschwenkbares (49) und quer oder schräg zur Lateralrichtung (45) fixier- und handhabbares Einrast- oder Einrückorgan, das am Unter- beziehungsweise Oberteil (2 beziehungsweise 1) anscharniert ist, ausgebildet sind.

13. Artikulator nach Anspruch 12, dadurch gekennzeichnet, daß der Spalt (53) rückseitig am Unterteil (2) durch zwei nebeneinander vorspringende und nach oben offene Haken (54) gebildet, und das Einrückorgan (14) rückseitig am Oberteil (1) anscharniert und beidseits mit Vorsprüngen (55) in Richtung der Scharnierachse (23) versehen sind, die zur Aufnahme durch die Haken (54) ausgebildet sind.

14. Artikulator nach einem der vorangehenden Ansprüche, dadurch gekennzeichnet, daß das Ober- und/oder Unterteil (1,2) zumindest teilweise jeweils mit einer Neigung (11) von etwa 10° gegenüber der Horizontalebene verläuft.

15. Artikulator nach Anspruch 14, dadurch gekennzeichnet, daß in Richtung nach dorsal gesehen die Neigung schräg nach oben verläuft.

## Claims

1. Articulator for simulating jaw movements, having an upper and lower part (1, 2) pivotably connected together and acting as a support for a maxillary and/or mandibular model, wherein the hinge (4) has a hinge box (18), connected to an upper or lower part (1, 2), as well as a hinge head (20) held movably therein and connected to the lower or upper part (1, 2) respectively, wherein one or more guides for generating components of motion (47) of the hinge head (20) for surtrusion and/or retrotrusion are provided in the hinge box (18), characterised in that the respective guide has a first guide face section or guide track section (24; 38) extending parallel to the direction of a hypothetical hinge axis (23) and consecutively a second guide face section or guide track section (26, 40) extending obliquely to the direction of the hinge axis (23) in such a manner that surtrusive and/or retrotrusive components of motion (47) of the hinge head (20) are generated.

2. Articulator according to claim 1, characterised in that the second guide face- or guide track-sections (26, 40) include an acute angle (27, 40) with the hinge axis (23) such that the lower part direction of motion deviates from the hinge axis (23) surtrusively and/or retrotrusively at an angle of approximately 13° - 17°, in particular 15°.

3. Articulator according to claim 2, characterised in that the acute angle is approximately 30°.

4. Articulator according to claim 1, 2 or 3, characterised in that the second guide faces or tracks (26, 40) extend at least in part in a linear manner.

5. Articulator according to claim 1, 2, 3 or 4, characterised by an inwardly or concavely curved (19) hinge box (18) having a radius of approximately three-quarters of an inch.

6. Articulator according to one of the preceding claims, characterised by a locating channel (28) opening into the interior (19) of the hinge box (18) and in which an actuator (29) is movably guided in order to act on the hinge head (20) so as to displace same.

7. Articulator according to claim 6, characterised in that the channel (28) is so oriented that the actuator (29) acts on the hinge head in order to produce a protrusion and/or latero-protrusion (45, 46).

8. Articulator according to claim 6 or 7, characterised in that the channel (28) is formed as a through-bore with a female thread, and the actuator (29) is formed as a screw engaging therewith.

9. Articulator according to one of the preceding claims, wherein a Bennett angle rule (30) is disposed on the hinge (4) in order to displace, and/or limit the path of motion of, the hinge head (20), characterised in that the Bennett angle rule (30) is arranged at a fixed angle (36) of 10° to the hinge joint axis (23) and/or jaw median plane (44).

10. Articulator according to one of the preceding claims, wherein a Bennett angle rule (30) is disposed on the hinge (4) in order to displace, and/or limit the path of motion of, the hinge head (20), characterised in that the Bennett angle rule (30) has a 3 mm-long scale of adjustment (42) with half-millimetre subdivisions.

11. Articulator for simulating jaw movements, having an upper and lower part (1, 2) acting as a support for a maxillary and/or mandibular model and connected by means of one or more hinges (4), which also permit transverse or lateral components of motion (45) of the lower part (2) transverse to the median or sagittal plane (44) and/or in the direction of the hinge axis (23) of the hinges (4), according to one of the preceding claims, characterised by a first and second locking element (14, 15), which are disposed on the upper and lower part (1, 2) and are capable of being engaged with one another in a detachable manner in order to exclude relative lateral components of motion (45) between the upper and lower part (1, 2).

12. Articulator according to claim 11, characterised in that one of the locking elements (15) is formed as a catch or slot (53) mounted immovably on the upper or lower part (1, 2), and the other locking element (14) is formed as an engaging element capable of swiveling (49) into the slot and of being fixed and handled transverse or obliquely to the lateral direction (45) and is pivotably connected to the lower or upper part (2 or 1 respectively).

13. Articulator according to claim 12, characterised in that the gap (53) is formed at the back of the lower part (2) by two adjacent, projecting, upwardly-open hooks (54), and the engaging element (14) is pivotably connected to the rear of the upper part (1) and are provided on both sides in the direction of the hinge axis (23) with lugs (55) formed so as to be received by the hooks (54).

14. Articulator according to one of the preceding claims, characterised in that the upper and/or lower part (1, 2) extends at least in part at an incline (11) of approximately 10° to the horizontal plane.

15. Articulator according to claim 14, characterised in that the incline extends obliquely upwards viewed in the dorsal direction.

## Revendications

1. Articulateur pour la simulation de mouvements de mâchoires, comportant une partie supérieure et une partie inférieure (1, 2) reliées l'une à l'autre de manière articulée et servant comme support d'un modèle de mâchoire supérieure et/ou d'un modèle de mâchoire inférieure, l'articulation (4) présentant un boîtier d'articulation (18) relié à la partie supérieure ou inférieure (1, 2), et une tête d'articulation (20), qui y est reçue de manière mobile et qui est reliée respectivement avec la partie inférieure ou supérieure (2, 1), un ou plusieurs guidages destinés à engendrer des composantes de mouvement (47) de la tête d'articulation (20) étant prévus dans le boîtier d'articulation (18) pour réaliser un mouvement vers le haut ou surtrusion et/ou un mouvement en direction postérieure ou rétrusion, caractérisé en ce que chaque guidage considéré présente un premier tronçon de surface ou de chemin de guidage (24; 38), qui s'étend parallèlement à la direction d'un axe de charnière fictif (23), et, à la suite, un second tronçon de face ou de chemin de guidage (26, 40), qui s'étend de manière oblique par rapport à la direction de l'axe de charnière (23), de manière telle, que soient engendrées des composantes de mouvement (47) de la tête d'articulation (20), orientées vers le haut pour la surtrusion et/ou en direction postérieure pour la rétrusion.

2. Articulateur selon la revendication 1, caractérisé en ce que le ou les seconds tronçons de surface ou de chemin de guidage (26, 40) incluent avec l'axe de charnière (23) un angle aigu (27, 40a) tel, que la direction de mouvement de la partie inférieure dévie de l'axe de charnière (23) en direction du haut et/ou en direction postérieure, d'un angle d'environ 13° à 17°, notamment de 15°.

3. Articulateur selon la revendication 2, caractérisé en ce que l'angle aigu atteint environ 30°.

4. Articulateur selon la revendication 1, 2 ou 3, caractérisé en ce que les seconds face ou chemin de guidage (26, 40) s'étendent au moins en partie de manière linéaire.

5. Articulateur selon la revendication 1, 2, 3 ou 4, caractérisé par un boîtier d'articulation (18) à bombement intérieur (19), à savoir concave, et présentant de préférence un rayon d'environ trois quart de pouce.

6. Articulateur selon l'une des revendications précédentes, caractérisé par un canal directif (28) débouchant dans l'intérieur (19) du boîtier d'articulation (18), et dans lequel est guidé, de manière mobile, un organe de positionnement (29) destiné à venir en prise avec la tête d'articulation (20) en vue de son déplacement.

7. Articulateur selon la revendication 6, caractérisé en ce que le canal (28) est orienté de manière à ce que l'organe de positionnement (29) agit sur la tête d'articulation de manière à causer un mouvement en direction antérieure ou protrusion et/ou une protusion latérale (45, 46).

8. Articulateur selon la revendication 6 ou 7, caractérisé en ce que le canal (28) est réalisé comme perçage de passage à filetage intérieur, et l'organe de positionnement (29) comme vis engrenant avec ledit filetage.

9. Articulateur selon l'une des revendications précédentes, dans lequel une règle d'angle de Bennett (30) est agencée à l'articulation (4) pour déplacer et/ou limiter la trajectoire de mouvement de la tête d'articulation (20), caractérisé en ce que la règle d'angle de Bennett (30) est agencée de manière à former un angle fixe (36) de 10° par rapport à l'axe de charnière (23) d'articulation et/ou au plan médian de mâchoire (44).

10. Articulateur selon l'une des revendications précédentes, dans lequel une règle d'angle de Bennett (30) est agencée à l'articulation (4) pour décaler et/ou limiter la trajectoire de mouvement de la tête d'articulation (20), caractérisé en ce que la règle d'angle de Bennet (30) présente une échelle de réglage (42) d'une longueur de trois millimètres, avec une subdivision en demi-millimètres.

11. Articulateur pour la simulation de mouvements de mâchoires, comportant une partie supérieure et une partie inférieure (1, 2) servant comme support d'un modèle de mâchoire supérieure et/ou d'un modèle de mâchoire inférieure, et qui sont reliées au moyen d'une ou de plusieurs articulations (4), qui permettent aussi des composantes de mouvement (45) transversales ou latérales de la partie inférieure (2), transversalement au plan médian ou sagittal (44) et/ou dans la direction de l'axe de charnière (23) des articulations (4), selon l'une des revendications précédentes, caractérisé par un premier et un second élément de verrouillage (14, 15), qui sont agencés à la partie supérieure et à la partie inférieure (1, 2), et peuvent être amenés en prise l'un avec l'autre, susceptible d'être dégagés l'un de l'autre, pour exclure des composantes de mouvement latérales (45) de la partie supérieure et inférieure (1, 2) l'une par rapport à l'autre.

12. Articulateur selon la revendication 11, caractérisé en ce que l'un des éléments de verrouillage (15) est réalisé comme cran ou fente (53) adjoint de manière non mobile à la partie supérieure ou inférieure (1, 2), et l'autre élément de verrouillage (14) sous la forme d'un organe encliquetable ou d'enclenchement, qui peut être basculé (49) dans l'élément de verrouillage précédent, peut être fixé et manoeuvré transversalement ou de manière oblique par rapport à la direction latérale (45), et est articulé à la manière d'une charnière à la partie inférieure ou bien supérieure (2 ou bien 1).

13. Articulateur selon la revendication 12, caractérisé en ce que la fente (53) est formée du côté arrière à la partie inférieure (2), par deux crochets (54) faisant saillie et disposés côte à côte en étant ouverts vers le haut, et l'organe d'enclenchement (14) est articulé à la manière d'une charnière du côté arrière à la partie supérieure (1) et est pourvu des deux côtés, en direction de l'axe de charnière (23), de protubérances (55) d'une configuration leur permettant d'être accueillies par les crochets (54).

14. Articulateur selon l'une des revendications précédentes, caractérisé en ce que la partie supérieure et/ou la partie inférieure (1, 2) s'étendent chaque fois, au moins en partie, avec une inclinaison (11) d'environ 10° par rapport au plan horizontal.

15. Articulateur selon la revendication 14, caractérisé en ce que, vue en direction dorsale, l'inclinaison s'étend de manière oblique vers le haut.
